# EUROPÄISCHE PATENTSCHRIFT

(11) **EP 0 651 927 B1**
(45) Veröffentlichungstag und Bekanntmachung des Hinweises auf die Patenterteilung: **09.10.1996**
(21) Anmeldenummer: 93915832.5
(22) Anmeldetag: 07.07.1993
(51) Int. Cl.: H04L 25/14

(54) **VERFAHREN ZUR WEITERLEITUNG EINES NACHRICHTENZELLENSTROMS ÜBER EINE MEHRZAHL PARALLELER VERBINDUNGSLEITUNGEN UNTER EINHALTUNG DER REIHENFOLGE DER NACHRICHTENZELLEN**
METHOD FOR FORWARDING A SIGNAL-CELL FLOW ALONG A MULTIPLICITY OF PARALLEL JUNCTION LINES WHILE MAINTAINING THE CELL SEQUENCE
PROCEDE DE TRANSMISSION D'UN FLUX DE CELLULES D'INFORMATION PAR L'INTERMEDIAIRE D'UNE PLURALITE DE LIGNES DE JONCTION PARALLELES, TOUT EN MAINTENANT L'ORDRE DES CELLULES D'INFORMATION

(30) Priorität: 20.07.1992 EP 92112345
(43) Veröffentlichungstag der Anmeldung: 10.05.1995
(73) Patentinhaber: SIEMENS AKTIENGESELLSCHAFT, 80333 München (DE)
(72) Erfinder: BRÜCKNER, Roland, D-89264 Weissenhorn (DE)
(86) Internationale Anmeldenummer: EP9301768
(87) Internationale Veröffentlichungsnummer: WO9403005

(56) Entgegenhaltungen:
- EP-A- 0 213 641
- US-A- 3 708 783
- ELECTRONICS AND COMMUNICATIONS IN JAPAN Bd. 68, Nr. 9, 1985, NEW YORK, US Seiten 98 - 104 T. NISHIZONO ET AL. 'Analysis of a Multilink Packet Transmission System with Random Allocation'
- PATENT ABSTRACTS OF JAPAN vol. 4, no. 152 (E-031)24. Oktober 1980 & JP,A,55 104 159 (NIPPON TELEGRAPH AND TELEPHONE CORP.) 9. August 1980

## Beschreibung

Verfahren zur Weiterleitung eines Nachrichtenzellenstroms über eine Mehrzahl paralleler Verbindungsleitungen unter Einhaltung der Reihenfolge der Nachrichtenzellen

Die Erfindung betrifft ein Verfahren zum Weiterleiten eines Nachrichtenzellenstroms über eine Mehrzahl paralleler Verbindungsleitungen, bei dem
- der Nachrichtenzellenstrom Nachrichtenzellen fester Länge im Zuge eines asynchronen Ubertragungsverfahrens führt,
- die Transportrate des Nachrichtenzellenstroms größer ist als die Transportrate einer einzelnen Verbindungsleitung,
- aufeinanderfolgende Nachrichtenzellen des Nachrichtenzellenstroms zyklisch auf die Mehrzahl von Verbindungsleitungen verteilt und weitergeleitet werden.

Auf den einzelnen physikalischen Übertragungsstrecken eines Übertragungssystems ist die Ubertragungsbitrate technologiebedingt durch die Verarbeitungsgeschwindigkeit der zum Einsatz kommenden Übertragungselemente wie z.B. Verbindungsleitungen oder Koppelelemente begrenzt. Soll nun ein Nachrichtenzellenstrom, dessen Transportbitrate die Ubertragungsbitrate einer einzelnen physikalischen Übertragungsstrecke übersteigt, übertragen werden, so kann er über eine Mehrzahl paralleler physikalischer Übertragungsstrecken übertragen werden.

Aus IEEE International Conference on Communications ICC '90 Conference Record 16.-19.4.1990, Atlanta, USA, Band 2, pp. 771-777, ist ein Übertragungssystem bekannt, bei dem ein Strom von Nutzdaten führenden Paketen über eine Gruppe von parallelen Verbindungsleitungen weitergeleitet wird. Aufeinanderfolgende Nachrichtenzellen werden dabei auf die Gruppe von Verbindungsleitungen zyklisch verteilt und während desselben Zeitschlitzes weitergeleitet. Dabei können auf Grund von unterschiedlichen Längen, unterschiedlicher Temperatur oder unterschiedlichen Leitungslängen von Verbindungsleitungen auf der Gruppe der Verbindungsleitungen oder auf Grund von Schwankungen der Taktfrequenzen bei plesiochronen Vermittlungssystemen ungerichtete Laufzeitabweichungen der Pakete auftreten. Beim Empfang der Pakete kann es auf Grund der Laufzeitabweichungen, wie weiter unten genauer beschrieben, zu Fehlern in der Reihenfolge der Pakete kommen.

Der Erfindung liegt das Problem zugrunde, ein Verfahren anzugeben, das eine Weiterleitung von Nachrichtenzellen eines Nachrichtenzellenstroms über eine Mehrzahl paralleler Verbindungsleitungen unter Sicherstellung der Reihenfolge der Nachrichtenzellen - auch bei Auftreten von ungerichteten Laufzeitabweichungen auf den einzelnen Verbindungsleitungen - erlaubt.

Das Problem wird bei dem eingangs genannten Verfahren dadurch gelöst, daß
- die aufeinanderfolgenden Nachrichtenzellen zeitlich gegeneinander versetzt werden,
- beim Empfang der Nachrichtenzellen die Verbindungsleitungen gleichsinnig zyklisch abgefragt werden, wobei bei der zyklischen Abfrage aufeinanderfolgender Verbindungsleitungen
   a) der Versatz kürzer ist als der Versatz, mit dem aufeinanderfolgende Nachrichtenzellen weitergeleitet werden, und
   b) der zeitliche Abstand des Beginns zweier aufeinanderfolgender Abfragezyklen kürzer ist als die Dauer der Weiterleitung einer Nachrichtenzelle.

Das erfindungsgemäße Verfahren ermöglicht nach Maßgabe des Bedarfs an Übertragungskapazität eines Nachrichtenzellenstroms eine flexible Bereitstellbarkeit einer Mehrzahl von Verbindungsleitungen, wobei die Reihenfolge der Nachrichtenzellen des Nachrichtenzellenstroms bei der Übergabe an eine nachfolgende Übertragungseinrichtung strikt eingehalten wird. Dabei ist der Beginn eines Abfragezyklus' mit den Ubertragungszeitschlitzen auf den Verbindungsleitungen unkorreliert.

Eine Weiterbildung des erfindungsgemäßen Verfahrens sieht vor, daß bei der Ankunft einer Nachrichtenzelle von einer Verbindungsleitung in einer Empfangseinrichtung ein Ankunftszeichen gesetzt und das gesetzte Ankunftszeichen bei der Abfrage der Verbindungsleitung zurückgesetzt wird. Durch diese Maßnahme wird sichergestellt, daß jede Nachrichtenzelle nur einmal in einer Empfangseinrichtung übernommen wird.

Eine weitere Weiterbildung des erfindungsgemäßen Verfahrens sieht vor, daß die Bezeichnungen von Nachrichtenzellen, die auf ein Bündel aufeinanderfolgender Verbindungsleitungen weitergeleitet werden sollen, in die verbindungsleitungszugehörige Warteschlange eingetragen werden, deren Bezeichnung sich durch Maskierung der niederstwertigen Binärzeichen der binär dargestellten Warteschlangen-Bezeichnung ergibt. Diese Maßnahme bringt für Bündelstärken, deren Anzahl von Verbindungsleitungen durch einen ganzzahligen Exponenten zur Mantisse 2 dargestellt werden kann, eine besonders einfache Anwahl einer Warteschlange mit sich.

Die Erfindung wird nun als Ausführungsbeispiel in zum Verständnis erforderlichem Umfang anhand von Figuren näher beschrieben.

Dabei zeigen
- Fig. 1: eine Darstellung der erfindungsgemäßen Weiterleitung aufeinanderfolgender Nachrichtenzellen eines Nachrichtenzellenstroms über ein Bündel von vier Verbindungsleitungen
- Fig. 2: eine schematische Darstellung der Zusammenschaltung von drei Koppelelementen, bei denen das erfindungsgemäße Verfahren angewandt werden kann
- Fig. 3: eine zeitgleiche (synchrone) Weiterleitung von aufeinanderfolgenden Nachrichtenzellen eines Nachrichtenzellenstroms über ein Bündel von vier Verbindungsleitungen gemäß dem Stand der Technik
- Fig. 4: das Zustandekommen eines beim Stand der Technik möglichen Fehlers in der Reihenfolge der Nachrichtenzellen bei der Abfrage der Verbindungsleitungen
- Fig. 5 und Fig. 6: die erfindungsgemäße Abfrage eines Bündels von Verbindungsleitungen mit einem jeweils gegenüber Fig. 1 geänderten Beginn der Abfrage in bezug auf den Ankunftszeitpunkt der ersten Nachrichtenzelle des Nachrichtenzellenstroms
- Fig. 7: die erfindungsgemäße Abfrage von zwei auf jeweils vier Verbindungsleitungen benachbarten Eingängen eines Koppelelements zugeführten Nachrichtenzellenströmen
- Fig. 8: die reihenfolgerichtige Weiterleitung von gemäß Fig. 7 empfangenen Nachrichtenzellen auf ein Bündel von vier Verbindungsleitungen
- Fig. 9: die reihenfolgerichtige Weiterleitung von gemäß Fig. 7 empfangenen Nachrichtenzellen auf ein Bündel von acht Verbindungsleitungen.

Fig. 2 zeigt drei Koppelelemente SE1, SE2, SE3 mit jeweils 16 Eingängen und acht Ausgängen. Aufbau und Wirkungsweise solcher Koppelelemente sind an sich z.B. aus IEEE JOURNAL ON SELECTED AREAS IN COMMUNICATIONS, Vol. 9, No. 8, October 1991, bekannt und brauchen deshalb hier nicht näher beschrieben zu werden. Die Ausgänge des Koppelelementes SE1 und des Koppelelementes SE2 sind über Verbindungsleitungen VL1...VL8 bzw. VLf...VLn mit den Eingängen des Koppelelementes SE3 verbunden. Die Eingänge des Koppelelementes SE1 und des Koppelelementes SE2 sind mit Eingangsleitungen EL1...EL4, EL5...EL8...EL13...EL16 bzw. ELk.. ..ELn...ELw...ELz verbunden. Die Eingangsleitungen mögen wiederum mit den Ausgängen von nicht näher dargestellten Koppelelementen oder mit anderen zur Weiterleitung von Nachrichtenzellen geeigneten Einrichtungen, die entfernt angeordnet sein können, verbunden sein. Die mit den Ausgängen des Koppelelementes SE3 verbundenen Ausgangsleitungen ALO...AL7 können wiederum mit nachfolgenden Koppelelementen verbunden sein oder zu entfernten Einrichtungen zur Weiterleitung von Nachrichtenzellen führen. Im folgenden können die Eingangsleitungen EL und die Ausgangsleitungen AL allgemein als Verbindungsleitungen VL betrachtet werden. Auf den Verbindungsleitungen erfolgt jeweils eine Übertragung von Nachrichtenzellen im Zuge von virtuellen Verbindungen nach einem asynchronen Übertragungsverfahren (asynchronous transfer mode) mit konstanter Nachrichtenzellenrate. Bei den Nachrichtenzellen möge es sich dabei um Zellen fester Länge handeln, welche jeweils über einen Zellkopf mit beispielsweise fünf Oktetts Länge sowie einen Nutzdatenteil mit z.B. 48 Oktetts Länge verfügen. In dem Nutzdatenteil erfolgt die Übertragung der eigentlichen Nachrichtensignale. Unter Nachrichtensignalen sollen dabei Nachrichten- und Textsignale sowie Sprach- bzw. Bildsignale in digitaler Form verstanden werden. Ein Nachrichtenzellenkopf weist u.a. eine sog. virtuelle Kanalnummer auf, durch die die in Frage kommende virtuelle Verbindung auf der jeweiligen Verbindungsleitung bezeichnet ist. In Übertragungspausen werden im übrigen den Nachrichtenzellen entsprechende Leerzellen übertragen.

Ein Nachrichtenzellenstrom, dessen Ubertragungsbitrate von beispielsweise 600 Mbit/s die Transportbitrate einer Verbindungsleitung mit beispielsweise 150 Mbit/s übersteigt, wird über eine Mehrzahl von im Beispiel vier Verbindungsleitungen übertragen.

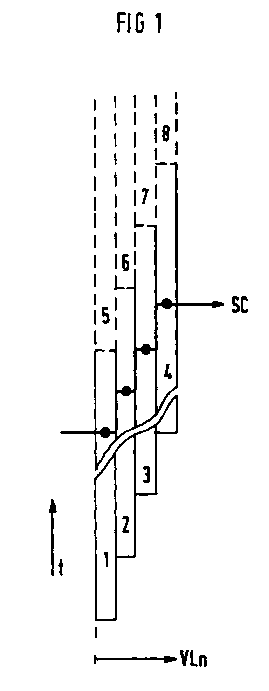

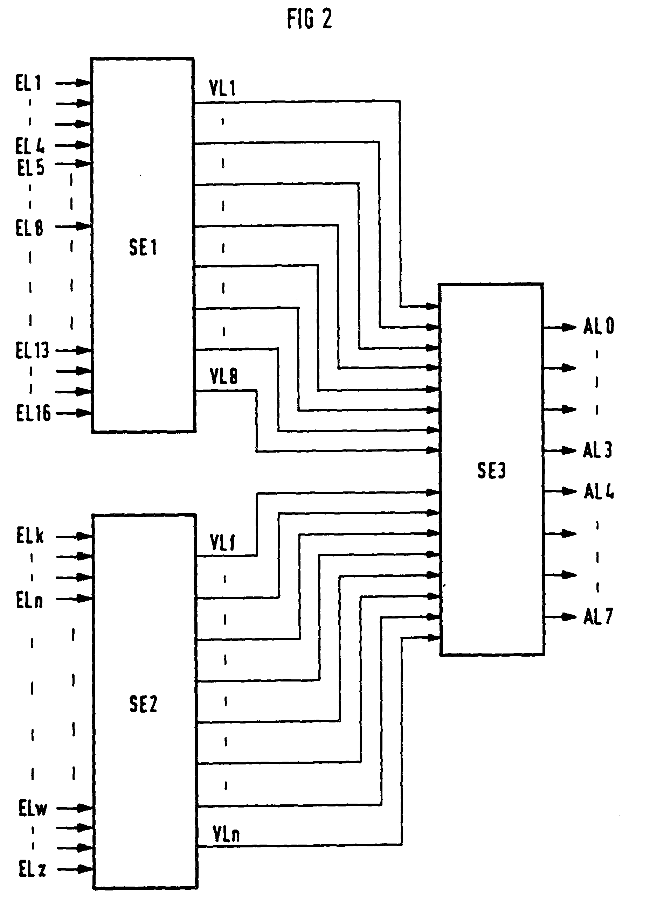

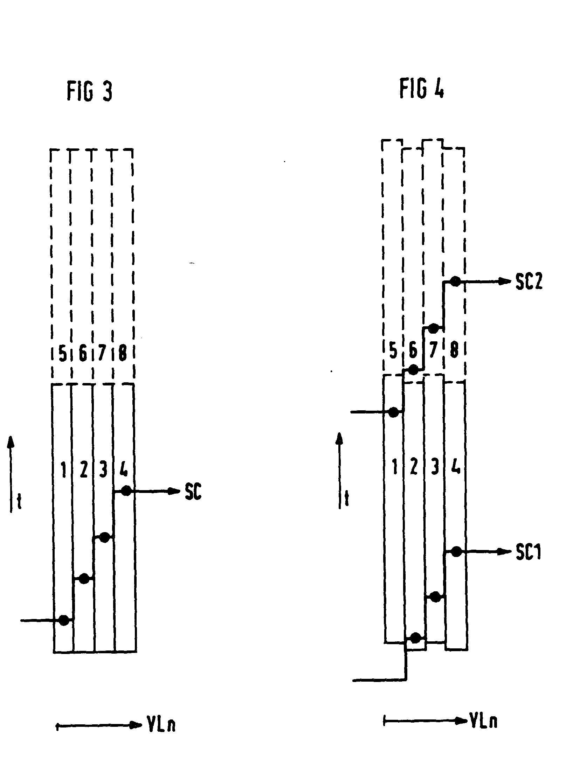

Gemäß einem Merkmal der Erfindung werden aufeinanderfolgende Nachrichtenzellen eines Nachrichtenzellenstroms zyklisch auf eine Mehrzahl von Verbindungsleitungen verteilt, wobei die Nachrichtenzellen jeweils gegenüber der unmittelbar vorhergehenden Nachrichtenzelle mit einem festen zeitlichen Versatz weitergeleitet werden. Fig. 1 zeigt eine zeitliche Darstellung der Weiterleitung von aufeinanderfolgenden, fortlaufend numerierten Nachrichtenzellen eines Nachrichtenzellenstroms über eine Mehrzahl von vier Verbindungsleitungen VLn. Innerhalb einer zyklischen Verteilung von Nachrichtenzellen auf die Verbindungsleitungen weisen die Nachrichtenzellen zu der jeweils vorhergehenden Nachrichtenzelle einen konstanten zeitlichen Versatz auf, der beispielsweise die Ubertragungsdauer von drei Oktetts betragen mag. Die Verbindungsleitungen aus Fig. 1 mögen nun durch die Eingangsleitungen EL1...EL4 gegeben sein, wobei die mit der fortlaufenden Nummer 1 und 5 bezeichneten Nachrichtenzellen auf der Eingangsleitung EL1 und die mit den fortlaufenden Nummern 2, 3, 4, 6, 7, 8 bezeichneten Nachrichtenzellen sinngemäß auf den Eingangsleitungen EL2...EL4 übertragen werden. Die Eingänge eines Koppelelementes SE mögen jeweils mit einer Eingangsleitung verbunden sein. Für jeden Eingang wird bei Ankunft einer Nachrichtenzelle ein Ankunftszeichen (-flag) gesetzt. Die Eingänge eines Koppelelements werden zyklisch auf das Vorliegen von gesetzten Ankunftszeichen hin abgefragt. Die zyklische Abfrage der Eingänge erfolgt in dem gleichen Durchlaufsinn, mit dem die Nachrichtenzellen auf die Verbindungsleitungen verteilt werden. Bei einer vorgegebenen Durchlaufrichtung der zyklischen Abfrage der Eingänge liegt die Anschlußlage der Eingangsleitungen fest. Gemäß einem Merkmal der Erfindung ist vorgesehen, daß der zeitliche Versatz, mit dem aufeinanderfolgende Eingänge auf gesetzte Ankunftszeichen hin abgefragt werden, kürzer ist als der Versatz, mit dem aufeinanderfolgende Nachrichtenzellen weitergeleitet werden. Der zeitliche Versatz, mit dem aufeinanderfolgende Eingänge abgefragt werden, beträgt beispielsweise die Ubertragungsdauer von zwei Oktetts. In Fig. 1 ist eine mit SC bezeichnete Abfrage von Eingängen dargestellt, denen der Nachrichtenzellenstrom zugeführt wird. Die schwarzen Punkte zeigen an, daß ein gesetztes Ankunftszeichen erkannt wurde. Im übrigen wird ein jeweils erkanntes Ankunftszeichen zurückgesetzt. Bei dem in Fig. 1 dargestellten Abfragezyklus werden die Nachrichtenzellen mit den fortlaufenden Folgenummern 1, 2, 3, 4 in der korrekten Reihenfolge detektiert. Im übrigen sei darauf hingewiesen, daß der Beginn der zyklischen Abfrage nicht mit der Ankunft der Nachrichtenzellen korreliert ist. In diesem Zusammenhang steht auch das Merkmal der Erfindung, wonach der zeitliche Abstand des Beginns zweier aufeinanderfolgender Abfragezyklen kürzer ist als die Dauer zur Weiterleitung einer Nachrichtenzelle.

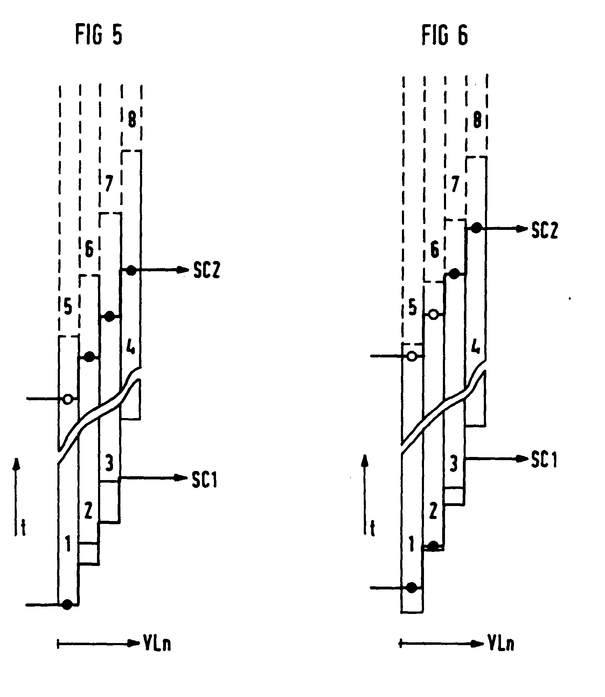

Fig. 3 zeigt die Weiterleitung von fortlaufend numerierten Nachrichtenzellen eines Nachrichtenzellenstroms über eine Mehrzahl von vier Verbindungsleitungen gemäß dem Stand der Technik, wobei Nachrichtenzellen auf den Verbindungsleitungen zeitgleich (synchron) ausgesendet sind. Wie durch schwarze Punkte kenntlich gemacht, wird bei der Abfrage SC der Verbindungsleitungen die Reihenfolge der Nachrichtenzellen korrekt detektiert. Bei der in Fig. 4 dargestellten Weiterleitung von Nachrichtenzellen gemäß dem Stand der Technik möge es beispielsweise auf Grund von Temperaturunterschieden auf den einzelnen Verbindungsleitungen oder auf Grund von unterschiedlichen Längen der einzelnen Verbindungsleitungen zu einer willkürlichen Verschiebung der Ankunftszeitpunkte der Nachrichtenzellen auf den einzelnen Verbindungsleitungen kommen. Bei der in Fig. 4 dargestellten Zeitlage von zwei aufeinanderfolgenden Abfragen SC1, SC2 in bezug auf die Ankunftszeitpunkte von Nachrichtenzellen auf den einzelnen Verbindungsleitungen erfolgt ein Fehler in der Reihenfolge der erkannten Nachrichtenzellen. Während der ersten Abfrage SC1 werden nämlich die Nachrichtenzellen mit der fortlaufenden Folgenummer 2, 3, 4 und während der zweiten Abfrage SC2 die Nachrichtenzellen mit der fortlaufenden Folgenummer 1, 6, 5, 8 erkannt.

Fig. 5 zeigt zwei aufeinanderfolgende Abfragen SC1 und SC2 nach dem erfindungsgemäßen Verfahren, wobei der Beginn der ersten Abfrage SC1 mit dem Zeitpunkt der Ankunft der Nachrichtenzelle mit der fortlaufenden Folgenummer 1 zusammenfällt. Dabei wird während der ersten Abfrage die Nachrichtenzelle mit der fortlaufenden Folgenummer 1 erkannt. Während der zweiten Abfrage SC2 wird zum einen, wie durch einen weißen Punkt dargestellt, die Nachrichtenzelle mit der fortlaufenden Folgenummer 1 nicht mehr erkannt, da ihr Ankunftszeichen bereits während der ersten Abfrage SC1 zurückgesetzt wurde, und zum andern werden die Nachrichtenzellen mit der fortlaufenden Folgenummer 2, 3, 4 erkannt, womit die Reihenfolge der Nachrichtenzellen eingehalten ist. Wie ersichtlich, werden auch in diesem Fall die Nachrichtenzellen in der korrekten Reihenfolge ihrer fortlaufenden Folgenummern erkannt.

Fig. 6 zeigt zwei aufeinanderfolgende Abfragen SC1 und SC2 nach dem erfindugnsgemäßen Verfahren, wobei der Beginn der ersten Abfrage SC1 um die Ubertragungsdauer einiger Oktette später erfolgt als der Zeitpunkt der Ankunft der Nachrichtenzelle mit der fortlaufenden Folgenummer 1. Während der ersten Abfrage SC1 werden die Nachrichtenzellen mit der fortlaufenden Folgenummer 1 und 2 erkannt und während der zweiten Abfrage SC2 die Nachrichtenzellen mit der fortlaufenden Folgenummer 3 und 4. Wie ersichtlich, werden die Nachrichtenzellen in der korrekten Reihenfolge ihrer fortlaufenden Folgenummern erkannt.

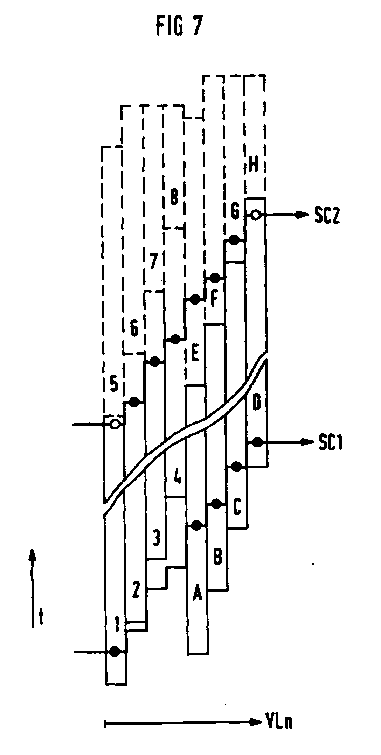

Fig. 7 zeigt einen mit fortlaufenden Folgenummern bezeichneten und einen mit Großbuchstaben in alphabetischer Reihenfolge bezeichneten Nachrichtenzellenstrom, die jeweils auf vier Verbindungsleitungen übertragen werden. Diese beiden Nachrichtenzellenströme mögen gegeneinander bezüglich der Ankunft der Nachrichtenzelle mit der fortlaufenden Folgenummer 1 einen zeitlichen Versatz aufweisen und aufeinanderfolgend abgefragten Eingängen eines Koppelelements zugeführt werden. Der Nachrichtenzellenstrom mit den mit fortlaufenden Folgenummern bezeichneten Nachrichtenzellen möge dem Koppelelement SE1 aus Fig. 2 auf den Eingangsleitungen EL1...EL4 und der Nachrichtenstrom mit den mit Großbuchstaben bezeichneten Nachrichtenzellen diesem Koppelelement auf den Eingangsleitungen EL5...EL8 zugeführt werden. Während der ersten Abfrage SC1 werden, wie durch schwarze Punkte kenntlich gemacht, die Nachrichtenzellen mit der Bezeichnung 1, A, B, C, D erkannt. Während der zweiten Abfrage werden die Nachrichtenzellen mit der Bezeichnung 2, 3, 4, E, F, G erkannt. Wie ersichtlich, werden die Nachrichtenzellen für jeden Nachrichtenzellenstrom in der korrekten Reihenfolge erkannt. Die Erkennung von aufeinanderfolgenden Nachrichtenzellen eines Nachrichtenzellenstroms während unterschiedlicher Abfragen ist für ein asynchrones Ubertragungsverfahren unerheblich. Weiter ist in dem Ausführungsbeispiel nach Fig. 7 zu erkennen, daß der zeitliche Versatz bei der Abfrage in stetem Wechsel einmal die Zeitdauer zur Übertragung eines Oktetts und einmal die Zeitdauer zur Übertragung zweier Oktette beträgt. Dieser Wechsel im Versatz beruht darauf, daß bei einem Koppelelement wie z.B. in Fig. 2, das eine doppelt so große Anzahl von Eingängen wie Ausgängen aufweist, nach der Abfrage von zwei Eingängen ein Ausgang bedient wird.

Der zeitliche Versatz bei der Abfrage der Verbindungsleitungen gemäß Fig. 7 ist dabei stets kleiner als der Versatz, mit dem aufeinanderfolgende Nachrichtenzellen weitergeleitet werden.

Die Ausgänge eines Koppelelements sind jeweils mit einer in eine vorgegebene Richtung führenden Verbindungsleitung verbunden. Jedem Ausgang eines Koppelelements ist eine als FIFO organisierte Warteschlange zugeordnet. In eine jeweilige Warteschlange werden die Bezeichnungen von für die Weiterleitung auf der zugehörigen Verbindungsleitung bestimmten Nachrichtenzellen in der Reihenfolge der Erkennung bei der Abfrage der Eingänge eingetragen. Eine Mehrzahl von in eine Richtung führenden Verbindungsleitungen bildet ein Richtungsbündel. Die Bezeichnung von für die Weiterleitung auf einem Richtungsbündel vorgesehenen Nachrichtenzellen werden in nur eine Warteschlange eingetragen. Die Bezeichnung einer einem Richtungsbündel zugeordneten Warteschlange kann durch Maskierung der niederwertigsten Bits (LSB = least significant bits) der binär kodierten Bezeichnung der Warteschlangen erfolgen. Unter Maskierung soll dabei verstanden werden, daß ein Binärzeichen unabhängig von seinem eigentlichen Zustand auf den Wert Null gesetzt wird. Bilden also beispielsweise die Ausgangsleitungen AL0...AL3 und die Ausgangsleitungen AL4...AL7 jeweils ein Richtungsbündel, so wird dem mit den Ausgangsleitungen ALO...AL3 gebildeten Richtungsbündel die Warteschlange mit der Bezeichnung 000₂ = 000₁₀ und dem mit den Ausgangsleitungen AL4...AL7 gebildeten Richtungsbündel die Warteschlange mit der Bezeichnung 100₂ = 4₁₀ zugeordnet. Zur Weiterleitung werden die Nachrichtenzellen in der Reihenfolge ihrer Bezeichnungen in der Warteschlange auf die zugehörige Ausgangsleitung gegeben. Für den Fall, daß die Nachrichtenzellen auf ein Richtungsbündel weitergeleitet werden sollen, werden die Nachrichtenzellen in der Reihenfolge ihrer Bezeichnungen in der zugehörigen Warteschlange zyklisch auf die Ausgangsleitungen des Richtungsbündels ausgegeben.

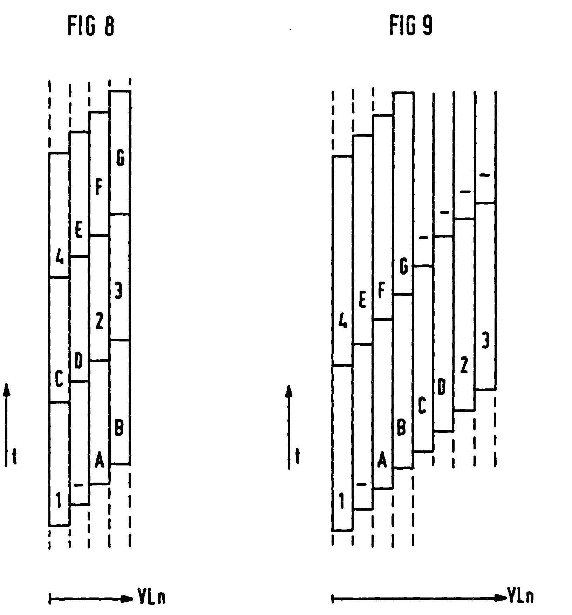

Fig. 8 zeigt die Weiterleitung der gemäß Fig. 7 empfangenen Nachrichtenzellen auf ein Richtungsbündel mit vier Verbindungsleitungen, wobei die Transportrate auf jeder der vier Verbindungsleitungen in Fig. 8 doppelt so hoch ist wie die auf einer der Verbindungsleitungen in Fig. 7.

Fig. 9 zeigt die Weiterleitung der gemäß Fig. 7 empfangenen Nachrichtenzellen auf ein Richtungsbündel mit acht Verbindungsleitungen, wobei die Verbindungsleitungen in Fig. 7 und in Fig. 9 jeweils die gleiche Transportrate aufweisen.

## Patentansprüche

1. Verfahren zum Weiterleiten eines Nachrichtenzellenstroms über eine Mehrzahl paralleler Verbindungsleitungen (VL),
bei dem
- der Nachrichtenzellenstrom Nachrichtenzellen fester Länge im Zuge eines asynchronen Ubertragungsverfahrens führt,
- die Transportrate des Nachrichtenzellenstroms größer ist als die Transportrate einer einzelnen Verbindungsleitung,
- aufeinanderfolgende Nachrichtenzellen des Nachrichtenzellenstroms zyklisch auf die Mehrzahl von Verbindungsleitungen verteilt und weitergeleitet werden,
**dadurch gekennzeichnet**, daß
- die aufeinanderfolgenden Nachrichtenzellen zeitlich gegeneinander versetzt werden,
- beim Empfang der Nachrichtenzellen die Verbindungsleitungen gleichsinnig zyklisch abgefragt werden, wobei bei der zyklischen Abfrage aufeinanderfolgender Verbindungsleitungen
a) der Versatz kürzer ist als der Versatz, mit dem aufeinanderfolgende Nachrichtenzellen weitergeleitet werden, und
b) der zeitliche Abstand des Beginns zweier aufeinanderfolgender Abfragezyklen kürzer ist als die Dauer der Weiterleitung einer Nachrichtenzelle.

2. Verfahren nach Anspruch 1,
**dadurch gekennzeichnet**, daß
aufeinanderfolgende Nachrichtenzellen mit einem zeitlichen Versatz fester Zeitdauer weitergeleitet werden.

3. Verfahren nach Anspruch 1 oder 2,
**dadurch gekennzeichnet**, daß
der zeitliche Versatz, mit dem aufeinanderfolgende Nachrichtenzellen weitergeleitet werden, einen Bruchteil der Dauer der Weiterleitung einer Nachrichtenzelle beträgt.

4. Verfahren nach Anspruch 3,
**dadurch gekennzeichnet**, daß
der Bruchteil gleich dem Anteil einer Verbindungsleitung an der Gesamtzahl der Mehrzahl von Verbindungsleitungen ist.

5. Verfahren nach Anspruch 3,
**dadurch gekennzeichnet**, daß
der Bruchteil kleiner ist als der Anteil einer Verbindungsleitung an der Gesamtzahl der Mehrzahl von Verbindungsleitungen.

6. Verfahren nach einem der vorhergehenden Ansprüche,
**dadurch gekennzeichnet**, daß
bei einem Empfang von Nachrichtenzellen in einem Koppelelement die Verbindungsleitungen mit einem zeitlichen Versatz abgefragt werden, der gleich dem zeitlichen Abstand ist, mit dem in dem Koppelelement Nachrichtenzellen von aufeinanderfolgend abgefragten Verbindungsleitungen in einen zentralen Speicher eingeschrieben werden können.

7. Verfahren nach einem der vorhergehenden Ansprüche,
**dadurch gekennzeichnet**, daß
bei der Ankunft einer Nachrichtenzelle von einer Verbindungsleitung in einer Empfangseinrichtung ein Ankunftszeichen gesetzt wird und bei der Abfrage der Verbindungsleitung das gesetzte Ankunftszeichen zurückgesetzt wird.

8. Verfahren nach einem der vorhergehenden Ansprüche,
**dadurch gekennzeichnet**, daß
für eine Weiterleitung von Nachrichtenzellen aus einem Koppelelement (SE) auf ein Bündel von Verbindungsleitungen die Bezeichnungen dieser Nachrichtenzellen in eine bündelzugehörige Warteschlange eingetragen werden und die Nachrichtenzellen nach Maßgabe der Reihenfolge der Bezeichnungen in der Warteschlange zyklisch auf die Verbindungsleitungen dieses Bündels weitergeleitet werden.

9. Verfahren nach Anspruch 8,
**dadurch gekennzeichnet**, daß
die Bezeichnungen von Nachrichtenzellen, die auf ein Bündel aufeinanderfolgender Verbindungsleitungen weitergeleitet werden sollen, in die verbindungsleitungszugehörige Warteschlange eingetragen werden, deren Bezeichnung sich durch Maskierung der niederstwertigen Binärzeichen der binär dargestellten Warteschlangen-Bezeichnung ergibt.

## Claims

1. Method for forwarding a stream of message cells via a plurality of parallel trunks (VL), in which
- the stream of message cells carries message cells of fixed length in the course of an asynchronous transmission method,
- the transport rate of the stream of message cells is higher than the transport rate of an individual trunk,
- successive message cells of the stream of message cells are distributed cyclically over the plurality of trunks and are forwarded,
characterized in that
- the successive message cells are chronologically offset relative to one another,
- the trunks are cyclically interrogated in the same direction during the reception of the message cells, in which case, during the cyclical interrogation of successive trunks,
a) the offset is shorter than the offset with which successive message cells are forwarded, and
b) the chronological interval between the start of two successive interrogation cycles is shorter than the duration of the forwarding of a message cell.

2. Method according to Claim 1, characterized in that successive message cells are forwarded with a chronological offset of a fixed duration of time.

3. Method according to Claim 1 or 2, characterized in that the chronological offset with which successive message cells are forwarded is a fraction of the duration of the forwarding of a message cell.

4. Method according to Claim 3, characterized in that the fraction is equal to the proportion formed by a trunk of the total number of the plurality of trunks.

5. Method according to Claim 3, characterized in that the fraction is smaller than the proportion formed by a trunk of the total number of the plurality of trunks.

6. Method according to one of the preceding claims, characterized in that, when message cells are received in a switching element, the trunks are interrogated with a chronological offset which is equal to the chronological interval with which message cells of successively interrogated trunks can be written into a central memory in the switching element.

7. Method according to one of the preceding claims, characterized in that, when a message cell arrives from a trunk, an arrival flag is set in a reception device, and the arrival flag which has been set is reset when the trunk is interrogated.

8. Method according to one of the preceding claims, characterized in that for forwarding message cells from a switching element (SE) onto a bundle of trunks, the designations of these message cells are entered into a queue associated with the bundle, and the message cells are cyclically forwarded onto the trunks of this bundle in accordance with the sequence of the designations in the queue.

9. Method according to Claim 8, characterized in that the designations of message cells which are to be forwarded onto a bundle of successive trunks are entered into the queue which is associated with the trunk and whose designation is derived by masking the least significant binary character of the queue designation which is expressed in binary form.

## Revendications

1. Procédé de retransmission d'un flux de cellules d'information par l'intermédiaire d'une pluralité de circuits (VL) de jonction parallèles, dans lequel
- le flux de cellules d'information conduit des cellules d'information de longueur fixe au cours d'un procédé de transmission asynchrone,
- la vitesse de transmission du flux de cellules d'information est plus grande que la vitesse de transmission d'un seul circuit de jonction,
- on répartit et on retransmet des cellules d'information successives du flux de cellules d'information cycliquement sur la pluralité de circuits de jonction,
caractérisé en ce que
- on décale dans le temps l'une par rapport à l'autre les cellules successives d'information,
- on interroge cycliquement dans le même sens, lors de la réception des cellules d'information, les circuits de jonction, et, lors de l'interrogation cyclique de circuits de jonction successifs,
a) le décalage est plus court que le décalage, avec lequel on retransmet des cellules d'information successives et
b) l'intervalle de temps s'écoulant entre les débuts de deux cycles d'interrogation successifs est plus court que la durée de la retransmission d'une cellule d'information.

2. Procédé suivant la revendication 1,
caractérisé en ce que
on retransmet des cellules d'information successives avec un décalage temporel de durée fixe.

3. Procédé suivant la revendication 1 ou 2,
caractérisé en ce que
le décalage temporel, avec lequel on retransmet des cellules d'information successives, représente une fraction de la durée de la retransmission d'une cellule d'information.

4. Procédé suivant la revendication 3,
caractérisé en ce que
la fraction est égale à la part d'un circuit de jonction au nombre total de circuits de jonction.

5. Procédé suivant la revendication 3,
caractérisé en ce que
la fraction est plus petite que la part d'un circuit de jonction au nombre total de circuits de jonction.

6. Procédé suivant l'une des revendications précédentes,
caractérisé en ce que
on interroge, lors d'une réception de cellules d'information dans un élément de couplage, les circuits de jonction avec un décalage temporel, qui est égal à l'intervalle de temps avec lequel on peut enregistrer, dans une mémoire centrale, des cellules d'information de circuits de jonction interrogés successivement dans l'élément de couplage.

7. Procédé suivant l'une des revendications précédentes,
caractérisé en ce que
on positionne, lors de l'arrivée d'une cellule d'information d'un circuit de jonction dans un dispositif de réception, un signe d'arrivée et on remet à l'état initial, lors de l'interrogation du circuit de jonction, le signe d'arrivée positionné.

8. Procédé suivant l'une des revendications précédentes,
caractérisé en ce que
on met, pour une retransmission de cellules d'information d'un élément (SE) de couplage à un faisceau de circuits de jonction, les désignations de ces cellules d'information dans une file d'attente associée au faisceau et on retransmet les cellules d'information cycliquement aux circuits de jonction de ce faisceau en fonction de l'ordre des désignations dans la file d'attente.

9. Procédé suivant la revendication 8,
caractérisé en ce que
on met les désignations de cellules d'information, que l'on doit retransmettre à un faisceau de circuits de jonction successifs, dans la file d'attente, qui est associée au circuit de jonction et dont la désignation s'obtient par masquage des signes binaires de plus faible poids de la désignation de file d'attente représentée de manière binaire.
